# EUROPÄISCHE PATENTSCHRIFT

(11) **EP 4 285 789 B1**
(45) Veröffentlichungstag und Bekanntmachung des Hinweises auf die Patenterteilung: **24.09.2025**
(21) Anmeldenummer: 23176556.1
(22) Anmeldetag: 31.05.2023
(51) Int. Cl.: A47C 27/08, F16K 15/18, F16K 15/20

(54) **MATRATZENVENTIL UND BAUGRUPPE**
MATTRESS VALVE AND ASSEMBLY
ENSEMBLE ET VALVE DE MATELAS

(30) Priorität: 03.06.2022 DE 102022114135
(43) Veröffentlichungstag der Anmeldung: 06.12.2023
(73) Patentinhaber: Emma Sleep GmbH, 60329 Frankfurt am Main (DE)
(72) Erfinder: Kukukhel, Harun, 60329 Frankfurt am Main (DE); Wazir, Mudasir, 60329 Frankfurt am Main (DE)
(74) Vertreter: Prinz & Partner mbB

(56) Entgegenhaltungen:
- WO-A1-2023/141329
- WO-A1-99/66817
- US-A1- 2003 079 778
- US-A1- 2016 166 079

## Beschreibung

Die vorliegende Erfindung betrifft ein Matratzenventil für eine aufblasbare Matratze und eine Baugruppe.

Selbstaufblasbare Matratzen weisen in der Regel ein Ventil auf, das einen Luftstrom zum Befüllen eines Innenvolumens der Matratze ermöglicht.

Um ein Entweichen der Luft zu unterbinden, sind Ventile bekannt, die einen Luftstrom nur entlang einer einzelnen Strömungsrichtung durch das Ventil ermöglichen, beispielsweise Rückschlagventile. Um nach dem Befüllen des Innenvolumens der Matratze, die Luft wieder aus der Matratze entweichen zu lassen, muss das Ventil vom Nutzer entfernt oder in der entgegengesetzten Richtung montiert werden. Dadurch ist der Bedienungskomfort jedoch gering. Auch erhöht sich hierdurch das Risiko, dass bei wiederholter Montage und Demontage des Ventils, Beschädigungen an einer Ventilaufnahme der Matratze auftritt. Ebenso kann das Ventil verloren gehen, wenn dies ständig ein- und ausgeschraubt wird. Zusätzlich ist es schwierig, einen gewünschten Härtegrad der Matratze einzustellen.

WO 2023/141329 A1, US 2003/079778 A1 und US 2016/166079 A1 offenbaren gattungsgemäße Ventile für aufblasbare Matratzen.

Der Erfindung liegt daher die Aufgabe zugrunde, ein Matratzenventil für eine aufblasbare Matratze und eine Baugruppe bereitzustellen, mittels denen die Nachteile von bekannten Ventilen und selbstaufblasbaren Matratzen ausgeräumt oder zumindest verringert werden können.

Die Aufgabe wird durch die Gegenstände der unabhängigen Patentansprüche gelöst. Vorteilhafte Ausgestaltungen sind in den abhängigen Patentansprüchen und der nachfolgenden Beschreibung angegeben, von denen jeder für sich oder in (Sub-)Kombination Aspekte der Erfindung darstellen kann.

Gemäß einem Aspekt wird ein Matratzenventil für eine aufblasbare Matratze bereitgestellt. Das Matratzenventil umfasst einen Ventilgrundkörper und eine verriegelbare Druckbetätigungsvorrichtung, die relativ zum Ventilgrundkörper bewegbar ist. Das Matratzenventil weist einen Montageabschnitt mit einem Montagegewinde auf, mittels dem das Matratzenventil mit einem korrespondierenden Aufnahmegewinde der aufblasbaren Matratze koppelbar ist. Das Matratzenventil ist dazu eingerichtet, bei Druckbetätigung und im Freigabezustand der verriegelbaren Druckbetätigungsvorrichtung in einem eingeschraubten Zustand des Matratzenventils einen Luftstrom zwischen einem Innenvolumen der Matratze und einer Umgebung der Matratze zu ermöglichen. Die verriegelbare Druckbetätigungsvorrichtung ist eingerichtet, in einem Verriegelungszustand eine Druckbetätigung der Druckbetätigungsvorrichtung zu unterbinden.

Erfindungsgemäß kann eine unbeabsichtigte Druckbetätigung der verriegelbaren Druckbetätigungsvorrichtung durch einen zugrundeliegenden Verriegelungsmechanismus der Druckbetätigungsvorrichtung wirkungsvoll unterbunden werden, sodass die versehentliche Fehlbetätigung ausgeschlossen werden kann. So wird beispielsweise verhindert, dass ein Nutzer, dessen Gewicht im Schlaf zumindest teilweise auf die Druckbetätigungsvorrichtung wirkt, die Luft aus dem Innenvolumen der Matratze versehentlich entweichen lässt.

Ferner ermöglicht die Druckbetätigungsvorrichtung eine unmittelbare und bedarfsgerechte Befüllung des Innenvolumens der Matratze und insofern eine vorteilhaft direkte bedarfsgerechte Einstellung des Härtegrads der Matratze. Hierzu kann der Nutzer der Matratze einfach die Druckbetätigungsvorrichtung im Freigabezustand drücken, wodurch ein Luftstrom in die Matratze oder aus der Matratze heraus möglich ist, worüber der Härtegrad eingestellt wird. Dadurch erfordert die Matratze für Nutzer mit unterschiedlichem Gewicht keine weiteren Anpassungen. Wenn der Härtegrad eingestellt wird, bleibt das Matratzenventil im eingeschraubten Zustand, sodass das Matratzenventil nicht gelöst werden muss, um beispielsweise Luft aus der Matratze entweichen zu lassen bzw. die Matratze mit Luft zu befüllen.

Unter einer aufblasbaren Matratze kann insbesondere eine selbstaufblasbare Matratze verstanden werden. Die aufblasbare Matratze kann dann mittels des Matratzenventils derart eingerichtet sein, dass ihr Innenvolumen in Abhängigkeit einer auf die Matratze einwirkenden äußeren Last bis zu einem maximalen Fülllevel befüllt wird, also einem maximalen Volumen der Matratze.

Insbesondere wenn die von außen einwirkende Last unterhalb eines Lastschwellenwerts liegt, kann das Innenvolumen befüllt werden, zumindest wenn die Druckbetätigungsvorrichtung entriegelt ist und druckbetätigt wird, also gedrückt wird. Dadurch ergibt sich ein maximaler Härtegrad der Matratze. Wird der Lastschwellenwert überschritten, beispielsweise durch eine auf der Matratze liegende Person, kann Luft aus dem Innenvolumen der Matratze entweichen, zumindest wenn die Druckbetätigungsvorrichtung entriegelt ist und druckbetätigt wird, also gedrückt wird.

Sollte die Druckbetätigungsvorrichtung dagegen verriegelt sein, so kann die Druckbetätigungsvorrichtung nicht druckbetätigt werden. Folglich kann im Verriegelungszustand, also wenn die Druckbetätigungsvorrichtung verriegelt ist, keine Luft in die bzw. aus der Matratze strömen.

Unter einer verriegelbaren Druckbetätigungsvorrichtung kann vorliegend insbesondere eine Vorrichtung verstanden werden, die einerseits druckbetätigbar ist, aber andererseits ein Verriegelungsmechanismus unterbinden kann, dass die Druckbetätigungsvorrichtung druckbetätigt wird. Mit anderen Worten ist eine Druckbetätigung der Druckbetätigungsvorrichtung im Verriegelungszustand gesperrt, sodass der Nutzer die Druckbetätigungsvorrichtung nicht drücken kann. Im Freigabezustand ermöglicht ein Betätigen der Druckbetätigungsvorrichtung, also ein Drücken der Druckbetätigungsvorrichtung, dass sich über das Matratzenventil eine Strömungsverbindung zwischen dem Innenvolumen der Matratze und der Umgebung der Matratze einstellt, sodass generell ein Luftstrom vorliegen kann. Das tatsächliche Auftreten des Luftstroms hängt allerdings von den beidseits des Matratzenventils herrschenden (relativen) Drücken ab.

Der Verriegelungszustand der Druckbetätigungsvorrichtung führt zumindest dazu, dass ein, insbesondere unbeabsichtigtes, Betätigen der Druckbetätigungsvorrichtung keinen Luftstrom zur Folge hat.

Der Verriegelungsmechanismus, der der verriegelbaren Druckbetätigungsvorrichtung zugrunde liegt, erfolgt durch eine mechanisch blockierende Kopplung bzw. Anlage zweier Komponenten des Matratzenventils, die die Bewegung zumindest einer Komponente des Matratzenventils zumindest entlang eines Freiheitsgrads, insbesondere entlang eines translatorischen Freiheitsgrads, einschränkt oder verhindert.

Optional ist das Matratzenventil ausgebildet, Luftströme in entgegengesetzte Richtungen zu ermöglichen. Insbesondere können die Luftströme in entgegengesetzten Richtungen ermöglicht werden, ohne dass eine Positions- oder Lageänderung des Matratzenventils hierfür erforderlich ist. Das bedeutet, dass es beispielsweise nicht notwendig ist, das Matratzenventil umzuorientieren, um Luftströme in unterschiedlichen Richtungen zu ermöglichen. Dadurch kann das Risiko von Beschädigungen minimiert werden, die auftreten können, wenn das Matratzenventil umorientiert werden würde,. Mit anderen Worten handelt es sich bei dem Matratzenventil demnach um ein hinsichtlich der Strömungsrichtung reversibles Matratzenventil. Das so eingerichtete Matratzenventil ermöglicht also Luftströme zwischen dem Innenvolumen der Matratze und einem Außenraum bzw. einer Umgebung der Matratze unabhängig von einer bestimmten Orientierung des Matratzenventils.

Das Matratzenventil weist einen elastisch vorgespannten Ventilanker auf, der derart eingerichtet ist, dass eine Positionsänderung des Ventilankers relativ zum Ventilgrundkörper entlang einer Luftströmungsrichtung des Matratzenventils einen Luftstrom durch das Matratzenventil ermöglicht. Der Ventilanker kann also den Luftstrom in definierter Weise ermöglichen, wodurch die Kontrolle über die tatsächliche Freigabe des Luftstroms verbessert wird.

Die Luftströmungsrichtung ist vorliegend derart zu verstehen, dass sie die generelle Richtung zwischen zwei Volumina angibt (hier dem Innenvolumen der Matratze und dem Außenraum bzw. der Umgebung), die durch das Matratzenventil fluidisch gekoppelt werden, sofern die Druckbetätigungsvorrichtung betätigt wird und sich im Freigabezustand befindet. Fluidisch gekoppelt bedeutet also, das eine Strömungsverbindung hergestellt ist. Das Matratzenventil kann eine Längserstreckungsrichtung aufweisen, die vorliegend der Luftströmungsrichtung entspricht.

Beispielsweise kann das Matratzenventil eine (im Wesentlichen) zylindrische Form aufweisen. Die axiale Richtung der zylindrischen Form gibt dann die Längserstreckungsrichtung des Matratzenventils an, die vorliegend auch der Luftströmungsrichtung entspricht.

Mit dem elastisch vorgespannten Ventilanker ist insbesondere gewährleistet, dass dieser selbsttätig in eine geschlossene Stellung übergeht. Hierzu ist ein elastisches Vorspannungselement vorgesehen, beispielsweise eine Federvorrichtung, die den Ventilanker in die geschlossene Stellung beaufschlagt, in der ein Luftstrom durch das Matratzenventil unterbunden ist, auch wenn sich die verriegelbare Druckbetätigungsvorrichtung in ihrem Freigabezustand befindet.

Sobald der Ventilanker aufgrund einer Druckbetätigung der Druckbetätigungsvorrichtung relativ zum Ventilgrundkörper gegen die elastische Vorspannung des elastischen Vorspannungselements bewegt wird, ergibt sich die Strömungsverbindung zwischen dem Innenvolumen und der Umgebung, sodass der Luftstrom durch das Matratzenventil möglich wird.

Besonders bevorzugt weist der Ventilanker an seiner Außenseite eine helixförmige Kontur auf, die mit einer korrespondierenden Gegenkontur der Druckbetätigungsvorrichtung in Eingriff steht. Die Kontur kann als eine Rippe an der Außenseite des Ventilankers ausgebildet sein, wohingegen die Gegenkontur eine Nut ist. Alternativ kann die Kontur durch eine Nut gebildet sein, sodass es sich bei der Gegenkontur um eine abstehende Rippe handelt, die in die Nut eingreift. Durch die helixförmige Kontur und die entsprechende Gegenkontur kann eine besonders belastbare mechanische Kopplung zwischen dem Ventilanker und der Druckbetätigungsvorrichtung geschaffen werden, wobei eine relative Verdrehung der Druckbetätigungsvorrichtung zum Ventilanker aufgrund der helixförmigen Kontur eine translatorische bzw. axiale Relativbewegung zur Folge hat. Bei einer Drehbetätigung der Druckbetätigungsvorrichtung, die die Gegenkontur aufweist, verschiebt bzw. bewegt sich diese entlang des Abschnitts des Ventilankers, der die helixförmige Kontur aufweist.

Die helixförmige Kontur stellt demnach sicher, dass sich die Druckbetätigungsvorrichtung entlang der Luftströmungsrichtung bewegen kann. Vorliegend kann sich die Druckbetätigungsvorrichtung also entlang der axialen Längserstreckungsrichtung des Matratzenventils bewegen.

Optional weist die verriegelbare Druckbetätigungsvorrichtung einen drehbaren Ringabschnitt auf, der relativ zum Ventilgrundkörper drehbar ist. Der drehbare Ringabschnitt der Druckbetätigungsvorrichtung stellt demnach sicher, dass abweichend von der generellen Funktionalität der Druckbetätigung eine weitere Funktionalität vorliegt, nämlich die Verriegelung bzw. Entriegelung, deren Betätigung einen anderen Mechanismus erfordert, nämlich eine Rotation. Insofern kann die Druckbetätigungsvorrichtung auf verschiedene Weisen betätigt werden, die unterschiedliche Handlungen erfordern, nämlich eine Rotationsbewegung oder eine Druckbewegung, wodurch ein unbeabsichtigtes bzw. fehlerhaftes Betätigen vermieden wird.

Um den Härtegrad der Matratze einzustellen, muss also die Druckbetätigungsvorrichtung, insbesondere der drehbare Ringabschnitt, vom Verriegelungszustand in den Freigabezustand gebracht werden, indem der drehbare Ringabschnitt und somit die Druckbetätigungsvorrichtung verdreht wird.

Anschließend kann die Druckbetätigungsvorrichtung dann gedrückt werden, also druckbetätigt werden, um den Luftstrom über das Matratzenventil zu ermöglichen. Aufgrund der Druckbetätigung wird der Ventilanker gegen die elastische Vorspannung des elastischen Vorspannungselements bewegt, also gegen die Vorspannungskraft, wodurch eine Strömungsverbindung zwischen dem Innenvolumen der Matratze und deren Umgebung hergestellt wird, sodass der Füllstand der Matratze und somit der Härtegrad eingestellt werden kann.

Nachdem der gewünschte Härtegrad über das Matratzenventil eingestellt ist, kann der Luftstrom unterbunden bzw. die Strömungsverbindung wieder gesperrt werden, indem die Druckbetätigungsvorrichtung nicht mehr gedrückt wird. Das elastische Vorspannungselement drückt dann den Ventilanker in die geschlossene Stellung, in dem die Strömungsverbindung gesperrt und somit der Luftstrom unterbunden ist.

Um ein unbeabsichtigtes Druckbetätigen der Druckbetätigungsvorrichtung wirkungsvoll zu verhindern, kann die Druckbetätigungsvorrichtung danach wieder in ihren Verriegelungszustand gebracht werden, indem der drehbare Ringabschnitt wieder relativ zum Ventilgrundkörper verdreht wird. Insbesondere wird der drehbare Ringabschnitt nun in die entgegengesetzte Richtung gedreht.

Neben dem drehbaren Ringabschnitt kann die Druckbetätigungsvorrichtung zudem einen Lagerabschnitt aufweisen, über den die Druckbetätigungsvorrichtung mit dem Ventilanker mechanisch gekoppelt ist. Der Lagerabschnitt weist die Gegenkontur zur helixförmigen Kontur des Ventilankers auf.

Der drehbare Ringabschnitt und der Lagerabschnitt sind insbesondere einteilig miteinander ausgebildet, sodass die gesamte Druckbetätigungsvorrichtung einstückig ausgebildet ist.

Insbesondere ist der Ringabschnitt demnach auch relativ zum Ventilanker drehbar. Die mechanische Kopplung zwischen dem Ringabschnitt und dem Ventilanker wird über den Lagerabschnitt der Druckbetätigungsvorrichtung geschaffen, worüber ein Einfluss auf die Freigabe eines Luftstroms genommen werden kann.

Besonders bevorzugt ist der drehbare Ringabschnitt in einem definierten Winkelbereich relativ zum Ventilgrundkörper drehbar. Dadurch wird ein Überdrehen vermieden. Zudem wird ein definierter Rotationsraum geschaffen, der es dem Nutzer ermöglicht, in einfacher Weise zwischen Freigabezustand und Verriegelungszustand zu unterscheiden.

Es kann ferner vorgesehen sein, dass sich über den Winkelbereich einstellen lässt, wie groß der maximal mögliche Volumenstrom des Luftstroms bei Druckbetätigung der Druckbetätigungsvorrichtung ist.

Im Verriegelungszustand beträgt der maximal mögliche Volumenstrom 0 %, da ein Luftstrom vollkommen unterbunden ist. Dagegen kann im Freigabezustand ein maximal möglicher Volumenstrom von 100 % erreicht werden, wenn die Druckbetätigungsvorrichtung maximal druckbetätigt wird.

Der entsprechende Volumenstrom kann auch fein eingestellt werden, indem der drehbare Ringabschnitt und somit die gesamte Druckbetätigungsvorrichtung nicht bis in die Endstellung verdreht wird, die dem Freigabezustand entspricht. Anschließend kann die Druckbetätigungsvorrichtung nämlich nur maximal um eine Teilstrecke der maximal möglichen Gesamtstrecke axial bewegt werden, die vorliegt, wenn sich die Druckbetätigungsvorrichtung im Freigabezustand befindet. Die Länge der Teilstrecke hängt dabei davon ab, wie weit der drehbare Ringabschnitt relativ zum Grundkörper bzw. dem Ventilanker verdreht worden ist, also um welche Strecke der helixförmigen Kontur sich die Druckbetätigungsvorrichtung, insbesondere der Lagerabschnitt, entlang der helixförmigen Kontur bewegt hat.

Wenn ein geringer maximal möglicher Volumenstrom eingestellt wird, beispielsweise aufgrund einer Relativdrehung des drehbaren Ringabschnitts, lässt sich der Härtegrad sehr fein einstellen.

Bevorzugt kann der Winkelbereich durch die helixförmige Kontur bestimmt sein, insbesondere durch eine gesamte Ganglänge der helixförmigen Kontur. Insofern kann der Ringabschnitt entlang der helixförmigen Kontur relativ zum Ventilanker rotierbar sein und so eine relative Positionsänderung des Ringabschnitts und somit der gesamten Druckbetätigungsvorrichtung gegenüber dem Ventilanker ermöglichen. Dadurch wird die Möglichkeit geschaffen, bestimmte Komponenten des Matratzenventils gegenüber anderen zu bewegen, wodurch der Freigabezustand vom Verriegelungszustand unter anderem unterschieden werden kann.

Optional ist der drehbare Ringabschnitt eingerichtet, in Abhängigkeit seiner relativen Stellung zum Ventilgrundkörper eine Druckbetätigung der verriegelbaren Druckbetätigungsvorrichtung zu blockieren, nämlich im Verriegelungszustand. In einer Drehendstellung des drehbaren Ringabschnitts, die dem Freigabezustand entspricht, ist demnach eine Druckbetätigung der Druckbetätigungsvorrichtung möglich, wohingegen in der anderen Drehendstellung des drehbaren Ringabschnitts, die dem Verriegelungszustand entspricht, ist eine Druckbetätigung der Druckbetätigungsvorrichtung nicht möglich bzw. blockiert.

In anderen Worten ermöglicht es der drehbare Ringabschnitt zwischen dem Freigabezustand und dem Verriegelungszustand aufgrund seiner Stellung zu unterscheiden bzw. zwischen diesen Zuständen zu wechseln, indem der drehbare Ringabschnitt gedreht wird. Dies wird dadurch ermöglicht, dass der Ringabschnitt gegenüber dem Ventilgrundkörper, insbesondere auch gegenüber dem Ventilanker, rotierbar gelagert ist. Sobald der drehbare Ringabschnitt in die Drehendstellung verdreht wurde, die dem Freigabezustand entspricht, lässt sich die Druckbetätigungsvorrichtung entlang eines translatorischen Freiheitsgrads betätigen, nämlich drücken bzw. druckbetätigen.

Der entsprechende translatorische Freiheitsgrad, der (nur) im Freigabezustand vorliegt, kann demnach entlang der Luftströmungsrichtung, insbesondere entlang der Längserstreckungsrichtung, des Matratzenventils ausgebildet sein.

Unter einer Druckbetätigung der Druckbetätigungsvorrichtung kann vorliegend insbesondere eine Betätigung der Druckbetätigungsvorrichtung in axialer Richtung verstanden werden, also eine Betätigung entlang eines translatorischen Freiheitsgrads, hier der axialen Längserstreckungsrichtung des Matratzenventils. Anders ausgedrückt entspricht die Druckbetätigung der Druckbetätigungsvorrichtung einem Drücken der der Druckbetätigungsvorrichtung. Die Druckbetätigung erfolgt insofern vorliegend auch entlang der Luftströmungsrichtung, die durch das Matratzenventil bereitgestellt wird. Die Druckbetätigung wird durch Ausüben einer externen Kraft (Druckkraft) auf zumindest einen Teil der Druckbetätigungsvorrichtung ausgeübt, insbesondere entgegen der Vorspannkraft, die vom Vorspannungselement ausgeübt wird. Daher kann vorgesehen sein, dass die Druckbetätigung mit einer Kraft zu erfolgen hat, die größer als die Vorspannkraft ist.

In einigen Ausführungsformen weist der Ventilgrundkörper zumindest eine Anschlagfläche für die verriegelbare Druckbetätigungsvorrichtung auf, an der die verriegelbare Druckbetätigungsvorrichtung im Verriegelungszustand anliegt, sodass eine axiale Bewegung der verriegelbaren Druckbetätigungsvorrichtung relativ zum Ventilgrundkörper blockiert ist. Einerseits können so komplexe Mechaniken vermieden werden, andererseits stellt die mechanische Blockade eine besonders einfache und belastbare Blockade dar, den Verriegelungszustand der Druckbetätigungsvorrichtung zu gewährleisten.

Besonders bevorzugt ist die verriegelbare Druckbetätigungsvorrichtung derart eingerichtet, dass durch eine Rotation des Ringabschnitts vom Verriegelungszustand in den Freigabezustand ein axialer Abstand zwischen der Anschlagfläche des Ventilgrundkörpers und einer Anlagefläche der verriegelbaren Druckbetätigungsvorrichtung entsteht, der eine axiale Druckbetätigung der verriegelbaren Druckbetätigungsvorrichtung ermöglicht. Somit wird der translatorische Freiheitsgrad, der die Betätigung der Druckbetätigungsvorrichtung ermöglicht, in definierter Weise bereitgestellt. Der axiale Abstand kann auch als (axialer) Spalt bezeichnet werden.

Die Anlagefläche kann insbesondere eine Stirnfläche des Ringabschnitts sein, die sich normal zur Luftströmungsrichtung erstreckt. Das bedeutet, die Flächennormale der Anlagefläche kann in axialer Längserstreckungsrichtung des Matratzenventils orientiert sein. Mit anderen Worten kann die Stirnfläche zum Grundkörper gewandt sein bzw. der Anschlagfläche des Grundkörpers gegenüberliegen.

Bevorzugt weist der Ringabschnitt eine strukturierte Ringaußenkontur auf. Die Ringaußenkontur kann insbesondere geriffelt sein. So wird eine besonders gute Haptik für den Nutzer bereitgestellt, sodass dieser den Ringabschnitt gut greifen und bedarfsgerecht positionieren kann. Das Risiko eines Abrutschens vom Ringabschnitt wird minimiert.

Optional weist der Ventilgrundkörper eine Basisplatte und den Montageabschnitt auf, der sich ausgehend von der Basisplatte in eine Richtung erstreckt, die von dem Ringabschnitt wegweist. Mittels des Montageabschnitts kann das Matratzenventil mit einem entsprechend korrespondierenden Bauteil der Matratze derart gekoppelt werden, dass das Innenvolumen der Matratze grundsätzlich gegenüber einem Außenbereich bzw. der Umgebung der Matratze abgrenzt ist. Die Basisplatte stellt vorteilhaft die Möglichkeit bereit, das Matratzenventil bei der Kopplung mit dem korrespondierenden Bauteil der Matratze zu halten und die für die Kopplung notwendige Kraftausübung zu ermöglichen. Beispielsweise kann die Basisplatte dazu dienen, um eine Drehbewegung in leichterer Weise zu ermöglichen.

Insbesondere weist die Basisplatte eine strukturierte Außenoberfläche auf, beispielsweise eine Riffelung. Das Matratzenventil wird beim Einschrauben in die Matratze, insbesondere deren Ventilaufnahme, an der Basisplatte gehalten und gedreht. Durch die strukturierte Außenoberfläche wird das Risiko eines Abrutschens bei der Kopplung des Matratzenventils mit dem korrespondierenden Bauteil der Matratze minimiert, also der Ventilaufnahme.

Auch kann die Basisplatte die Anschlagfläche aufweisen, an der die Druckbetätigungsvorrichtung über ihre Anlagefläche im Verriegelungszustand anliegt. Eine Stirnfläche der Basisplatte kann insbesondere die Anschlagfläche aufweisen. Die Flächennormale der Anschlagfläche ist entlang der Luftströmungsrichtung und der axialen Längserstreckungsrichtung des Matratzenventils orientiert.

Grundsätzlich liegt die Druckbetätigungsvorrichtung im Verriegelungszustand direkt am Ventilgrundkörper an, nämlich über ihre Anlagefläche an der Anschlagfläche, wohingegen die Druckbetätigungsvorrichtung im Freigabezustand zum Ventilgrundkörper beabstandet ist, wodurch eine Druckbetätigung der Druckbetätigungsvorrichtung möglich ist. Mit anderen Wort ist im Freigabezustand ein (axialer) Spalt zwischen der Anschlagfläche und der Anlagefläche ausgebildet, der die (axiale) Druckbetätigung der Druckbetätigungsvorrichtung ermöglicht.

Bevorzugt schließt sich an den Montageabschnitt ein Einsteckabschnitt an, der sich ausgehend vom Montageabschnitt zu einem freien Ende des Ventilgrundkörpers erstreckt. Dadurch kann eine Limitierung der Freiheitsgrade bei der Kopplung des Matratzenventils mit der Matratze erreicht werden, sodass die Kopplung in definierter Weise erfolgt, beispielsweise entlang einer definierten Richtung oder Achse. So wird eine Fehlpositionierung des Matratzenventils bezüglich der Matratze vermieden. Darüber hinaus kann der Einsteckabschnitt dafür dienen, das Matratzenventil in Bezug auf eine Ventilaufnahme der Matratze auszurichten.

Optional weist der Einsteckabschnitt eine fluidische Schnittstelle auf. Das bedeutet, dass der Luftstrom durch den Einsteckabschnitt hindurch ermöglicht werden kann. Der Einsteckabschnitt dient somit auch der Leitung des Luftstroms, sodass dieser in definierter Weise geleitet wird.

Ferner kann ein Einsatzkörper vorgesehen sein, beispielsweise in Form eines Schraubdeckels mit Öffnungen, welcher endseitig in den Einsteckabschnitt eingeschraubt ist. Der Einsatzkörper kann die Strömungsrichtung beeinflussen bzw. definieren, insbesondere über die Orientierung und/oder die Anzahl der Öffnungen.

In einigen Ausführungsformen kann das Montagegewinde ein Außengewinde umfassen. Mittels des Montagegewindes kann das Matratzenventil mit einem korrespondierenden Bauteil der Matratze gekoppelt werden, nämlich einer Ventilaufnahme. Dadurch kann das Innenvolumen der Matratze im Wesentlichen luftdicht bezüglich des Außenraums bzw. der Umgebung der Matratze abgegrenzt werden, zumindest sofern die Druckbetätigungsvorrichtung nicht im Freigabezustand druckbetätigt wird.

Optional sind die Druckbetätigungsvorrichtung und/oder der Ventilgrundkörper aus einem Kunststoff gebildet. Dadurch kann das Risiko einer Beschädigung der Matratze, insbesondere der Außenhaut der Matratze, gegenüber einer metallenen Ausführung vermindert werden. Ferner ist die Herstellung vereinfacht und kostengünstig.

Gemäß einem weiteren Aspekt wird eine Baugruppe bereitgestellt. Die Baugruppe umfasst eine selbstaufblasbare Matratze und ein Matratzenventil wie zuvor beschrieben. Die Matratze weist eine Außenwand mit einem Aufnahmegewinde auf, das mit dem Montagegewinde des Matratzenventils derart koppelbar ist, dass ein durch die Außenwand und das Matratzenventil umschlossenes Innenvolumen der Matratze von der Umgebung der Matratze abgegrenzt ist.

Vorteilhaft wird so ein Luftstrom zwischen dem Innenvolumen und dem Außenraum der Matratze vermieden, zumindest solange die Druckbetätigungsvorrichtung des Matratzenventils nicht betätigt wird. Dadurch wird die bedarfsgerechte Befüllung des Innenvolumens der Matratze in besonders einfacher, sicherer und kontrollierter Weise ermöglicht. Insbesondere die bedarfsgerechte Einstellung des Härtegrads der Matratze wird dadurch für den Nutzer in kontrollierter Weise ermöglicht. Vorteilhaft sind keine weiteren Auslassventile o. ä. nötig, um den Füllstand des Innenvolumens der Matratze an die jeweilige Gebrauchssituation anzupassen.

Bevorzugt ist das Matratzenventil bei Druckbetätigung der Druckbetätigungsvorrichtung dazu eingerichtet, das Innenvolumen der aufblasbaren Matratze mit Luft aus der Umgebung bis zu dessen maximalen Volumen zu befüllen, wenn eine auf die Matratze einwirkende Last unterhalb eines Lastschwellenwerts liegt. Ferner ist das Matratzenventil dazu eingerichtet, einen Luftstrom aus dem Innenvolumen der aufblasbaren Matratze in die Umgebung zu gewährleisten, wenn die auf die Matratze einwirkende Last oberhalb des Lastschwellenwerts liegt. Wenn der Lastschwellenwert also nicht erreicht wird, ist eine automatische Selbstaufblasfunktion der Matratze bereitgestellt, sofern im Innenvolumen der Matratze relativ zum Außenbereich ein Unterdruck herrscht. In anderen Worten übt der Nutzer keine oder nur eine geringe externe Kraft bzw. Druck auf die Matratze aus und betätigt der Nutzer die Druckbetätigungsvorrichtung, so bläst sich die Matratze bei Vorliegen eines Unterdrucks im Innenvolumen automatisch auf ihren maximalen Härtegrad entsprechend dem maximalen Füllstand des Innenvolumens auf. Ist ein geringerer Härtegrad gewünscht, so übt der Nutzer eine über dem Lastschwellenwert liegende Kraft bzw. Druck auf die Matratze aus und druckbetätigt die Druckbetätigungsvorrichtung, insbesondere in ihrem Freigabezustand. Dies führt zu einem Luftstrom aus der Matratze hinaus, sodass sich der Härtegrad verringert. Dadurch wird der Einstellung des Härtegrads vorteilhaft in besonders einfacher Weise ermöglicht.

Bevorzugt kann der Lastschwellenwert dem Gewicht eines Erwachsenen, eines Jugendlichen oder eines Kindes entsprechen.

In einigen Ausführungsformen weist die selbstaufblasbare Matratze zumindest eine Luftkammer auf, die mit dem eingeschraubten Matratzenventil in Strömungsverbindung steht. Die Luftkammer weist offenporige Kammerwände auf. Die offenporigen Kammerwände stellen eine mechanische Struktur bereit, die durch Volumenänderung einen Unterdruck im Innenvolumen der Matratze relativ zum Umgebungsdruck erzeugt, sofern das Innenvolumen nicht bis zum maximalen Füllstand befüllt ist. Der Unterdruck kann genutzt werden, um das Innenvolumen (automatisch) zu befüllen, sofern die Druckbetätigungsvorrichtung betätigt wird. Dies entspricht dem Füllvorgang des Innenvolumens.

Wird eine externe Kraft auf die Matratze ausgeübt, wird die Luft aus den offenporigen Kammerwänden herausgepresst. Durch die auf die Matratze einwirkende Kraft bzw. Druck wird deshalb im Innenvolumen ein Überdruck relativ zum Umgebungsdruck erzeugt. Wird gleichzeitig die Druckbetätigungsvorrichtung betätigt, kann so Luft aus dem Innenvolumen der Matratze in die Umgebung herausgeleitet werden. Dies entspricht dem Leerungsvorgang des Innenvolumens.

Optional kann die Matratze zusätzlich eine wasser- und luftundurchlässige Außenwand aufweisen, die die offenporigen Kammerwände umgibt. Dadurch wird gewährleistet, dass Luftströme einzig durch das Matratzenventil hindurch erfolgen können.

Sämtliche im Hinblick auf die verschiedenen Aspekte erläuterten Merkmale sind einzeln oder in (Sub-)Kombination mit anderen Aspekten kombinierbar.

Die Erfindung sowie weitere vorteilhafte Ausgestaltungen und Weiterbildungen derselben werden im Folgenden anhand der in den Zeichnungen dargestellten Ausführungsbeispiele näher beschrieben und erläutert. Es zeigen:
- Fig. 1 eine vereinfachte schematische Schnittansicht der erfindungsgemäßen Baugruppe umfassend eine selbstaufblasbare Matratze und ein erfindungsgemäßes Matratzenventil,
- Fig. 2 eine Explosionsansicht des erfindungsgemäßen Matratzenventils,
- Fig. 3 eine weitere Darstellung des erfindungsgemäßen Matratzenventils, und
- Fig. 4 eine Schnittansicht des erfindungsgemäßen Matratzenventils entsprechend der Schnittlinie aus Figur 3.

Alle nachstehend in Bezug auf die Ausführungsbeispiele und/oder die begleitenden Figuren offengelegten Merkmale können allein oder in einer beliebigen Unterkombination mit Merkmalen der Aspekte der vorliegenden Offenbarung, einschließlich Merkmalen bevorzugter Ausführungsformen, kombiniert werden, vorausgesetzt, die sich ergebende Merkmalskombination ist für einen Fachmann auf dem Gebiet der Technik sinnvoll.

Für die Zwecke der vorliegenden Offenbarung bedeutet die Formulierung "mindestens eines von A, B und C" beispielsweise (A), (B), (C), (A und B), (A und C), (B und C) oder (A, B und C), einschließlich aller weiteren möglichen Kombinationen, wenn mehr als drei Elemente aufgeführt sind. Mit anderen Worten, der Begriff "mindestens eines von A und B" bedeutet im Allgemeinen "A und/oder B", nämlich "A" allein, "B" allein oder "A und B".

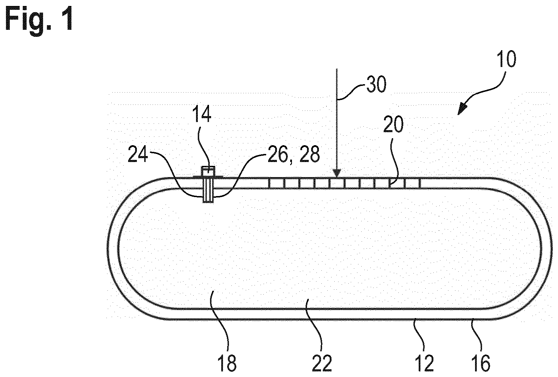

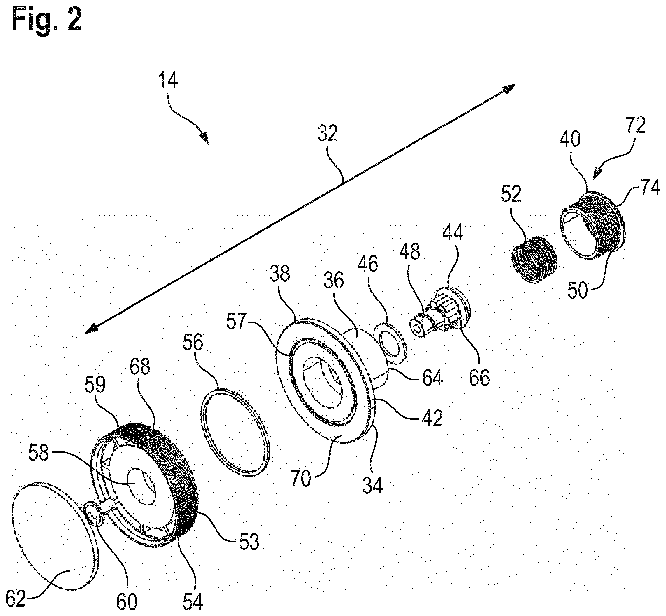

Fig. 1 zeigt eine vereinfachte schematische Schnittansicht der Baugruppe 10 umfassend eine selbstaufblasbare Matratze 12 und ein Matratzenventil 14, welches vorliegend nur schematisch gezeigt ist. Das Matratzenventil 14 ist in den Figuren 2 bis 4 detaillierter gezeigt.

Die selbstaufblasbare Matratze 12 umfasst eine Außenwand 16, die wasser- und luftundurchlässig ist. Innerhalb der Außenwand 16 ist zumindest eine Luftkammer 18 ausgebildet, die durch eine offenporige Kammerwand 20 begrenzt wird (hier nur teilweise dargestellt). Durch die Luftkammer 18 wird ein Innenvolumen 22 der Matratze 12 definiert.

Grundsätzlich kann die Matratze 12 neben der Luftkammer 18 auch noch weitere Bereiche aufweisen, die beispielsweise mit einem Schaumstoff gefüllt sind.

Es kann vorgesehen sein, dass die Luftkammer 18 in einem Schaumstoffbereich der Matratze 12 integriert ist. Mit anderen Worten stellt die Luftkammer 18 somit die Hohlbereiche eines ansonsten mit Schaumstoff gefüllten Bereichs der Matratze 12 dar.

Die Matratze 12 weist ferner eine Aufnahmevorrichtung 24 auf, die zur Kopplung mit dem Matratzenventil 14 vorgesehen ist, weswegen die Aufnahmevorrichtung 24 auch als Ventilaufnahme bezeichnet werden kann. Dazu weist die Aufnahmevorrichtung 24 ein Aufnahmegewinde 26 auf, das mit einem Montagegewinde 28 des Matratzenventils 14 im eingebauten Zustand zusammenwirkt. Durch das Matratzenventil 14 und die Außenwand 16 wird somit das Innenvolumen 22 der Matratze 12 gegenüber einem Außenraum bzw. der Umgebung umschlossen und abgegrenzt.

Wird eine externe Kraft durch eine Last 30 auf die Matratze 12 ausgeübt, die unterhalb eines Lastschwellenwerts liegt, so ermöglicht die offenporige Kammerwand 20 der Luftkammer 18, in dem Innenvolumen 22 einen Unterdruck gegenüber dem Außenraum bzw. der Umgebung der Matratze 12 zu erzeugen, sodass bei geöffnetem Matratzenventil 14 ein Luftstrom aus dem Außenraum bzw. der Umgebung durch das Matratzenventil 14 in die Luftkammer 18 ermöglicht wird, zumindest sofern eine Druckbetätigungsvorrichtung des Matratzenventils 14 freigegeben und druckbetätigt wird, wie nachfolgend noch anhand der Figuren 2 bis 4 erläutert wird. Dies wird dadurch ermöglicht, dass die offenporige Kammerwand 20 eine mechanisch stabilisierende Wirkung hat und dadurch Luft aus dem Innenvolumen 22 ansaugt um die offenen Poren der Kammerwand 20 zu füllen. Die mechanisch stabilisierende Wirkung wird durch die Zellwände der offenen Poren der Kammerwand 20 bereitgestellt.

Durch den Unterdruck wird die Matratze 12 in automatischer Weise (deshalb selbstaufblasend) bis zu einem maximalen Füllstand gefüllt, also bis zu ihrem maximalen Volumen. Nach dem vollständigen Füllvorgang hat die Matratze 12 ihren maximalen Härtegrad erreicht.

Ist das Innenvolumen 22 gefüllt und wird eine Last 30 mit einer Kraft auf die Matratze 12 ausgeübt, die oberhalb des Lastschwellenwerts liegt, so führt dies in der Luftkammer 18 zu einem Überdruck gegenüber dem Außenraum bzw. der Umgebung der Matratze 12. Ist die Druckbetätigungsvorrichtung des Matratzenventils 14 freigegeben und wird druckbetätigt, stellt sich deshalb ein Luftstrom aus der Luftkammer 18 in den Außenraum bzw. Umgebung ein, sodass der Füllstand des Innenvolumens 22 sinkt. Dadurch reduziert sich auch der Härtegrad der Matratze 12.

Der Nutzer kann somit den Härtegrad der Matratze 12 bedarfsgerecht anpassen, indem der Nutzer das Matratzenventil 14 betätigt, insbesondere die Druckbetätigungsvorrichtung des Matratzenventils 14 freigibt und druckbetätigt, wie nachfolgend erläutert wird.

Fig. 2 zeigt eine Explosionsansicht des Matratzenventils 14. Die Explosionsansicht des Matratzenventils 14 ist hier entlang der Luftströmungsrichtung gezeigt, dargestellt durch den Pfeil 32, die auch der axialen Längserstreckungsrichtung des Matratzenventils 14 entspricht, welches im zusammengebauten Zustand eine (im Wesentlichen) zylindrische Form hat.

Das Matratzenventil 14 weist einen Ventilgrundkörper 34 auf. Der Ventilgrundkörper 34 ist aus einem Kunststoff gefertigt.

Der Ventilgrundkörper 34 umfasst einen Montageabschnitt 36 und eine Basisplatte 38. Der Montageabschnitt 36 erstreckt sich ausgehend von der Basisplatte 38 entlang der Luftströmungsrichtungsrichtung in Richtung eines freien Endes 40 des Ventilgrundkörpers 34 und damit des Matratzenventils 14.

Die Basisplatte 38 wird genutzt, um das Matratzenventil 14 mit der Aufnahmevorrichtung 24 der Matratze 12 zu koppeln. Dazu weist die Basisplatte 38 eine strukturierte Außenoberfläche 42 auf, die gemäß dieser Ausführungsform eine Riffelung aufweist, um das Risiko eines Abrutschens zu minimieren, wenn der Nutzer das Matratzenventil 14 einschraubt. Der Nutzer greift die Basisplatte 38 an deren Außenoberfläche 42 an und dreht das Montageventil 14 über das am Montageabschnitt 36 ausgebildete Montagegewinde 28 in die Aufnahmevorrichtung 24 der Matratze 12 ein.

Das Matratzenventil 14 umfasst ferner einen zum Ventilgrundkörper 34 separat ausgebildeten Ventilanker 44, der sich im zusammengebauten Zustand ausgehend von dem Ventilgrundkörper 34 in Richtung des freien Endes 40 an den Ventilgrundkörper 34 anschließt. Zwischen dem Ventilgrundkörper 34 und dem Ventilanker 44 ist ein Dichtungsring 46 vorgesehen.

Der Ventilanker 44 weist an seiner Außenseite eine helixförmige Kontur 48 auf, auf deren Funktion später noch eingegangen wird.

Das Matratzenventil 14 umfasst ferner einen als Schraubdeckel ausgebildeten Einsatzkörper 50, der am freien Ende 40 des Matratzenventils 14 angeordnet ist. Das freie Ende 40 wird teilweise auch durch den Ventilgrundkörper 34 ausgebildet. Der als Schraubdeckel ausgebildete Einsatzkörper 50 weist ein Gewinde auf, das mit einem korrespondierenden Gewinde des Ventilgrundkörpers 34 zusammenwirkt. Insofern kann der Einsatzkörper 50 an dem Ventilgrundkörper 34 befestigt werden, indem der Einsatzkörper 50 eingeschraubt wird. An dem Einsatzkörper 50 können Öffnungen vorgesehen sein, über die eine Strömungsverbindung zwischen dem Matratzenventil 14 und dem Innenvolumen 22 der Matratze 14 hergestellt werden kann.

Der Einsatzkörper 50 stellt zudem eine Lagerung für ein elastisches Vorspannungselement 52 bereit, beispielsweise eine Federvorrichtung, mittels der der Ventilanker 44 im Einbauzustand elastisch vorgespannt ist, insbesondere in Richtung der Basispatte 38.

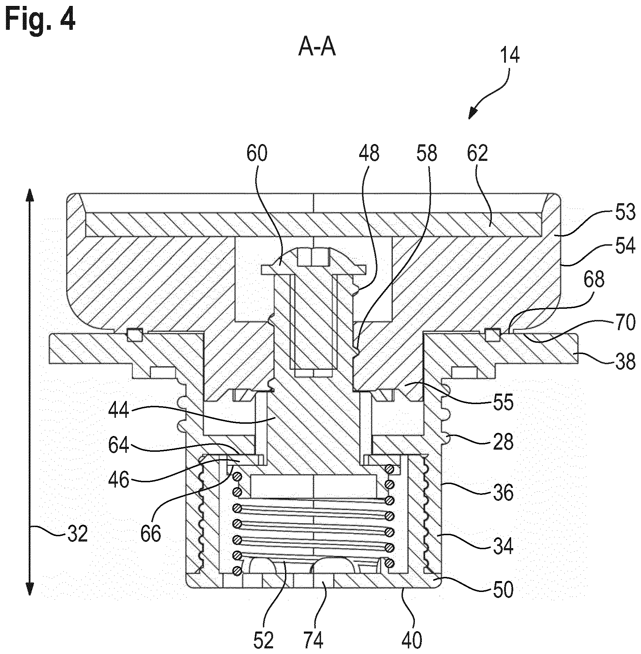

Das Matratzenventil 14 umfasst ferner eine Druckbetätigungsvorrichtung 53, die einen Ringabschnitt 54 sowie einen Lagerabschnitt 55 umfasst, wie aus Figur 4 hervorgeht. Der Ringabschnitt 54 und der Lagerabschnitt 55 sind gemeinsam einteilig ausgebildet, sodass die gesamte Druckbetätigungsvorrichtung 53 einstückig ausgebildet ist.

Der Ringabschnitt 54 ist entlang der Luftströmungsrichtung entgegengesetzt zum Ventilanker 44 relativ zum Ventilgrundkörper 34 angeordnet. Zwischen dem Ringabschnitt 54 und dem Ventilgrundkörper 34 ist ein Dichtring 56 angeordnet, welcher in einer Nut 57 des Ventilgrundkörpers 34 aufgenommen ist.

Die Druckbetätigungsvorrichtung 53, insbesondere der Lagerabschnitt 55, weist eine zu der helixförmigen Kontur 48 korrespondierende Gegenkontur 58 auf, sodass die Druckbetätigungsvorrichtung 53 mit dem Ventilanker 44 mittels der helixförmigen Kontur 48 und der Gegenkontur 58 mechanisch gekoppelt ist.

Eine Rotation der Druckbetätigungsvorrichtung 53, beispielsweise über ein Drehen des drehbaren Ringabschnitts 54, relativ zum Ventilanker 44 führt daher zu einer axialen Translation der Druckbetätigungsvorrichtung 53, also auch des Ringabschnitts 54 und des Lagerabschnitts 55, relativ zum Ventilanker 44. Ein Abdrehen der Druckbetätigungsvorrichtung 53 von der helixförmigen Kontur 48 wird dabei durch eine Sicherungsschraube 60 verhindert.

Der Ringabschnitt 54 weist eine Ringaußenkontur 59 auf, die geriffelt ist, um das Risiko eines Abrutschens bei einer Betätigung der Druckbetätigungsvorrichtung 53 zu vermindern.

An den Ringabschnitt 54 schließt sich eine Blende 62 an, die das Matratzenventil 14 in einer Richtung entgegengesetzt zum freien Ende 40 abschließt. Auf der Blende 62 können Informationen aufgedruckt, eingebrannt oder allgemein vorgesehen sein, die die Betätigung der Druckbetätigungsvorrichtung 53 erläutern.

Der Ventilgrundkörper 34 weist zudem eine Kontaktfläche 64 auf, an der eine Anstoßfläche 66 des Ventilankers 44 im unbetätigten Zustand des Matratzenventils 14 mittelbar anliegt. Mittelbar deshalb, da vorliegend der Dichtungsring 46 derart positioniert ist, dass er zwischen der Kontaktfläche 64 des Ventilgrundkörpers 34 und der Anstoßfläche 66 des Ventilankers 44 angeordnet ist. Der Ventilanker 44 wird dabei durch die Federvorrichtung bzw. das elastische Vorspannelement 52 in Richtung der Kontaktfläche 64 gedrückt.

In diesem Zustand befindet sich der Ventilanker 44 demnach in seiner geschlossenen Stellung, in der kein Luftstrom über das Matratzenventil 14 ermöglicht wird.

Bei Druckbetätigung des Matratzenventils 14 muss die Federkraft der Federvorrichtung bzw. die elastische Vorspannkraft des elastischen Vorspannelements 52 überwunden werden. Hierzu muss die Druckbetätigungsvorrichtung 53 jedoch zunächst aus dem in den Figuren 2 bis 4 gezeigten Verriegelungszustand in den Freigabezustand überführt werden, um eine Druckbetätigung der Druckbetätigungsvorrichtung 53 überhaupt zu ermöglichen.

Befindet sich das Matratzenventil 14 im Freigabezustand, liegt zwischen einer Anlagefläche 68 des Ringabschnitts 54 und einer Anschlagfläche 70 der Basisplatte 38 des Ventilgrundkörpers 34 ein (axialer) Abstand entlang der Luftströmungsrichtung des Matratzenventils 14 vor. Da der Ringabschnitt 54 indirekt über den Lagerabschnitt 55 mit dem Ventilanker 44 gekoppelt ist, ermöglicht dieser Abstand eine Druckbetätigung des Matratzenventils 14 durch Drücken auf die Blende 62 oder der gesamten Druckbetätigungsvorrichtung 53.

Übersteigt der ausgeübte Druck die durch die Federvorrichtung bzw. dem elastischen Vorspannelement 52 ausgeübte Federkraft bzw. Vorspannkraft führt dies zu einer translatorischen Verschiebung der Einheit umfassend die Druckbetätigungsvorrichtung 53und den Ventilanker 44 entlang der Luftströmungsrichtung des Matratzenventils 14.

Dadurch wird mittels der Druckausübung eine Distanz zwischen der Kontaktfläche 64 des Ventilgrundkörpers 34 und der Anstoßfläche 66 des Ventilankers 44 (unter Berücksichtigung des Dichtungsrings 46) geschaffen. Diese Distanz ermöglicht eine Luftströmung entlang des Matratzenventils 14. Die Strömungsverbindung mit dem Innenvolumen 22 der Matratze 12 wird dabei durch eine fluidische Schnittstelle 72 ermöglicht, die in einer Endfläche des als Schraubdeckel ausgebildeten Einsatzkörpers 50 ausgebildet ist und Öffnungen 74 aufweist.

Durch Rotation der Druckbetätigungsvorrichtung 53, insbesondere des Lagerabschnitts 55, entlang der helixförmigen Kontur 48 wird die Druckbetätigungsvorrichtung 53, also der Ringabschnitt 54 und der Lagerabschnitt 55, relativ zum Ventilgrundkörper 34 entlang der Luftströmungsrichtung bewegt, also in axialer Richtung.

Im Verriegelungszustand des Matratzenventils 14 liegt die Anlagefläche 68 der Druckbetätigungsvorrichtung 53, insbesondere des Ringabschnitts 54, an der Anschlagfläche 70 des Ventilgrundkörpers 34 an, wie aus Figur 4 hervorgeht.

Dadurch steht keine Distanz zur Verfügung, um die Druckbetätigungsvorrichtung 53 in axialer Richtung relativ zum Ventilgrundkörper 34 zu bewegen, da die Druckbetätigungsvorrichtung 53 (direkt) anliegt. Folglich steht auch keine Distanz zur Verfügung, um den mit der Druckbetätigungsvorrichtung 53 gekoppelten Ventilanker 44 bezüglich des Ventilgrundkörpers 34 entlang der Luftströmungsrichtung zu verschieben. Eine Druckausübung auf die Druckbetätigungsvorrichtung 53 zeigt deshalb keine Wirkung.

Ein Luftstrom kann so im Verriegelungszustand des Matratzenventils 14 wirkungsvoll unterbunden werden.

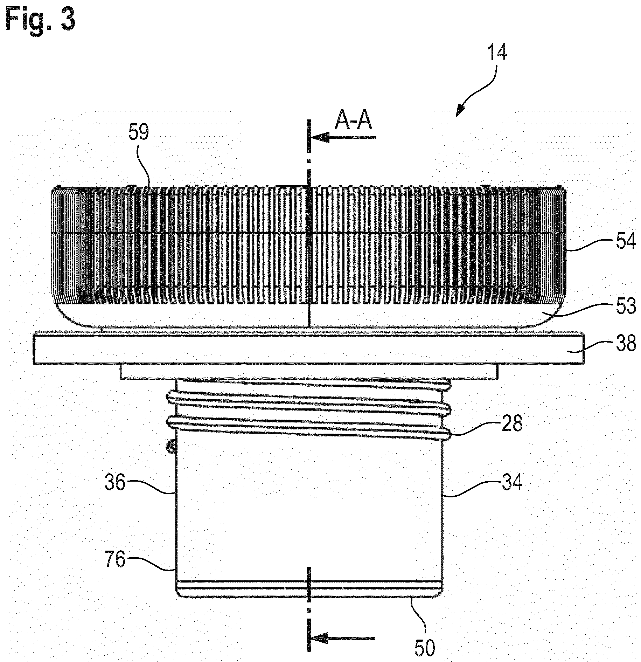

Fig. 3 zeigt eine weitere Darstellung des Matratzenventils 14.

Der Ventilgrundkörper 34 weist im Bereich des Montageabschnitts 36 das Montagegewinde 28 auf, mittels dem das Matratzenventil 14 mit der Aufnahmevorrichtung 24 der Matratze 12 gekoppelt werden kann.

Der Montageabschnitt 36 bildet zusammen mit dem als Schraubdeckel ausgebildeten Einsatzkörper 50 einen Einsteckabschnitt 76 des Matratzenventils 14 aus, um eine leichtere Führung bei der Kopplung mit der Aufnahmevorrichtung 24 der Matratze 12 zu ermöglichen. Ein Verkannten des Matratzenventils 14 bei der Kopplung mit der Aufnahmevorrichtung 24 der Matratze 12 wird so verhindert.

Fig. 4 zeigt eine Schnittansicht des Matratzenventils 14 entsprechend der Schnittlinie aus Figur 3 im Verriegelungszustand. Die Schnittansicht verdeutlicht insbesondere, wie die Federvorrichtung bzw. das elastische Vorspannelement 52 den Ventilanker 44 in Richtung des Ventilgrundkörpers 34 vorspannt. Die Anstoßfläche 66 des Ventilankers 44 liegt an der Kontaktfläche 64 des Ventilgrundkörpers 34 an, wobei zwischen den jeweiligen Flächen der Dichtungsring 46 angeordnet ist, der den Kontakt vermittelt.

Da die Druckbetätigungsvorrichtung 53 entlang der helixförmigen Ankerkontur 48 derart in eine Drehendstellung rotiert ist, dass die Anlagefläche 68 des Ringabschnitts 54 an der Anschlagflache 70 der Basisplatte 38 des Ventilgrundkörpers 34 anliegt, ist das Matratzenventil 14 vorliegend entsprechend dem Verriegelungszustand gezeigt. Ein Drücken (eine Kraftausübung) auf die Blende 62 bzw. die Druckbetätigungsvorrichtung 53 des Matratzenventils 14 führt deshalb nicht zu einer translatorischen Bewegung des Ventilankers 44 entlang der Luftströmungsrichtung.

Wird die Druckbetätigungsvorrichtung 53, insbesondere der Lagerabschnitt 55, entlang der helixförmigen Ankerkontur 48 rotiert, stellt sich ein (axialer) Abstand zwischen der Anlagefläche 68 des Ringabschnitts 54 und der Anschlagflache 70 der Basisplatte 38 des Ventilgrundkörpers 34 ein. Der sich einstellende (axiale) Abstand entspricht dem möglichen Verfahrweg des Ventilankers 44 entlang der Luftströmungsrichtung entgegen der Vorspannkraft der Federvorrichtung bzw. des Vorspannelements 52, wodurch die Freigabe eines Luftstroms erfolgen kann.

Mit anderen Worten kann der Nutzer das Matratzenventil 14, insbesondere die verriegelbare Druckbetätigungsvorrichtung 53, aus dem in Figur 4 gezeigten Verriegelungszustand in den Freigabezustand bringen, indem der Nutzer den Ringabschnitt 54 der Druckbetätigungsvorrichtung 53 aus der gezeigten Drehendstellung verdreht, wodurch sich die Druckbetätigungsvorrichtung 53 über ihren Lagerabschnitt 55 mit der Gegenkontur 58 entlang der helixförmigen Kontur 48 am Ventilanker 44 bewegt. Die Drehbewegung wird dabei aufgrund der helixförmigen Kontur 48 in eine translatorische Bewegung der Druckbetätigungsvorrichtung 53 übertragen, nämlich in axiale Richtung bzw. in Strömungsrichtung.

Die andere Drehendstellung kann dann vorliegen, wenn der Lagerabschnitt 55 am Kopf der Sicherungsschraube 60 anschlägt.

Es entsteht ein axialer Abstand zwischen der Anlagefläche 68 des Ringabschnitts 54 und der Anschlagflache 70 der Basisplatte 38 des Ventilgrundkörpers 34, der eine Druckbetätigung der Druckbetätigungsvorrichtung 53 ermöglicht.

Die Druckbetätigung der Druckbetätigungsvorrichtung 53 hat wiederum zur Folge, dass der Ventilanker 44 ebenfalls druckbetätigt wird, sofern die aufgebracht Druckkraft größer als die Vorspannkraft des elastischen Vorspannelements 52 ist.

In dem Fall bewegt sich dann der Ventilanker 44, wodurch sich die Anstoßfläche 66 des Ventilankers 44 von der Kontaktfläche 64 des Ventilgrundkörpers 34 löst, wodurch eine Strömungsverbindung über das Matratzenventil 14 ermöglicht wird.

Somit können generell Luftströme in entgegengesetzten Richtungen durch das Matratzenventil 14 gewährleistet werden. Dabei ist die sich spezifisch einstellende Luftströmungsrichtung von den Druckverhältnissen des Innenvolumens 22 der Matratze 12 und dem Außenbereich der Matratze 12 unter Berücksichtigung einer auf die Matratze 12 einwirkenden Last 30 abhängig.

In der vorliegenden Anmeldung kann auf Mengen und Zahlen Bezug genommen werden. Sofern nicht ausdrücklich angegeben, sind solche Mengen und Zahlen nicht als einschränkend zu betrachten, sondern als Beispiele für die möglichen Mengen oder Zahlen im Zusammenhang mit der vorliegenden Anmeldung. In diesem Zusammenhang kann in der vorliegenden Anmeldung auch der Begriff "Mehrzahl" verwendet werden, um auf eine Menge oder Zahl zu verweisen. In diesem Zusammenhang ist mit dem Begriff "Mehrzahl" jede Zahl gemeint, die größer als eins ist, z. B. zwei, drei, vier, fünf, usw. Die Begriffe "etwa", "ungefähr", "nahe" usw. bedeuten plus oder minus 5 % des angegebenen Wertes.

## Patentansprüche

1. Matratzenventil (14) für eine aufblasbare Matratze (12), mit einem Ventilgrundkörper (34) und einer verriegelbaren Druckbetätigungsvorrichtung (53), die relativ zum Ventilgrundkörper (34) bewegbar ist, wobei das Matratzenventil (14) einen Montageabschnitt (36) mit einem Montagegewinde (28) aufweist, mittels dem das Matratzenventil (14) mit einem korrespondierenden Aufnahmegewinde (26) der aufblasbaren Matratze (12) koppelbar ist, wobei das Matratzenventil (14) dazu eingerichtet ist, bei Druckbetätigung und im Freigabezustand der verriegelbaren Druckbetätigungsvorrichtung (53) in einem eingeschraubten Zustand des Matratzenventils (14) einen Luftstrom zwischen einem Innenvolumen (22) der Matratze (12) und einer Umgebung der Matratze (12) zu ermöglichen, und wobei die verriegelbare Druckbetätigungsvorrichtung (53) eingerichtet ist, in einem Verriegelungszustand eine Druckbetätigung der verriegelbaren Druckbetätigungsvorrichtung (53) zu unterbinden, wobei der Verriegelungszustand durch eine mechanisch blockierende Kopplung zweier Komponenten des Matratzenventils (14) ausgebildet ist, die die Bewegung der Druckbetätigungsvorrichtung (53) zumindest entlang eines Freiheitsgrads verhindert, und wobei eine Druckbetätigung der Druckbetätigungsvorrichtung (53) einem Drücken der Druckbetätigungsvorrichtung (53) entspricht, bei der ein Ventilanker (44) des Matratzenventils (14) gegen eine elastische Vorspannung eines elastischen Vorspannungselements (52) bewegt wird.

2. Matratzenventil (14) nach Anspruch 1, **dadurch gekennzeichnet, dass** das Matratzenventil (14) ausgebildet ist, Luftströme in entgegengesetzte Richtungen zu ermöglichen.

3. Matratzenventil (14) nach Anspruch 1 oder 2, **dadurch gekennzeichnet, dass** der elastisch vorgespannte Ventilanker (44) derart eingerichtet ist, dass eine Positionsänderung des Ventilankers (44) relativ zum Ventilgrundkörper (34) entlang einer Luftströmungsrichtung des Matratzenventils (14) einen Luftstrom durch das Matratzenventil (14) ermöglicht, insbesondere wobei der Ventilanker (44) an seiner Außenseite eine helixförmige Kontur (48) aufweist, die mit einer korrespondierenden Gegenkontur (58) der Druckbetätigungsvorrichtung (53) in Eingriff steht.

4. Matratzenventil (14) nach einem der vorhergehenden Ansprüche, **dadurch gekennzeichnet, dass** die verriegelbare Druckbetätigungsvorrichtung (53) einen drehbaren Ringabschnitt (54) aufweist, der relativ zum Ventilgrundkörper (34) drehbar ist, insbesondere in einem definierten Winkelbereich.

5. Matratzenventil (14) nach Anspruch 4, **dadurch gekennzeichnet, dass** der drehbare Ringabschnitt (54) eingerichtet ist, in Abhängigkeit seiner relativen Stellung zum Ventilgrundkörper (34) eine Druckbetätigung der verriegelbaren Druckbetätigungsvorrichtung (53) zu blockieren.

6. Matratzenventil (14) nach einem der Ansprüche 4 und 5, **dadurch gekennzeichnet, dass** der Ventilgrundkörper (34) zumindest eine Anschlagfläche (70) für die verriegelbare Druckbetätigungsvorrichtung (53) aufweist, an der die verriegelbare Druckbetätigungsvorrichtung (53) im Verriegelungszustand anliegt, sodass eine axiale Bewegung der verriegelbaren Druckbetätigungsvorrichtung (53) relativ zum Ventilgrundkörper (34) blockiert ist, insbesondere wobei die verriegelbare Druckbetätigungsvorrichtung (53) derart eingerichtet ist, dass durch eine Rotation des Ringabschnitts (54) vom Verriegelungszustand in den Freigabezustand ein axialer Abstand zwischen der Anschlagfläche (70) und einer Anlagefläche (68) der verriegelbaren Druckbetätigungsvorrichtung (53) entsteht, der eine axiale Druckbetätigung der verriegelbaren Druckbetätigungsvorrichtung (53) ermöglicht.

7. Matratzenventil (14) nach einem der Ansprüche 4 bis 6, **dadurch gekennzeichnet, dass** der Ringabschnitt (54) eine strukturierte Ringaußenkontur (59) aufweist, insbesondere eine geriffelte Ringaußenkontur (59).

8. Matratzenventil (14) nach einem der vorherigen Ansprüche, **dadurch gekennzeichnet, dass** der Ventilgrundkörper (34) eine Basisplatte (38) und den Montageabschnitt (36) umfasst, der sich ausgehend von der Basisplatte (38) in eine Richtung erstreckt, die von dem Ringabschnitt (54) wegweist, insbesondere wobei die Basisplatte (38) eine strukturierte Außenoberfläche (42) aufweist, beispielsweise eine Riffelung.

9. Matratzenventil (14) nach Anspruch 8, **dadurch gekennzeichnet, dass** sich an den Montageabschnitt (36) ein Einsteckabschnitt (76) anschließt, der sich ausgehend vom Montageabschnitt (36) zu einem freien Ende (40) des Ventilgrundkörpers (34) erstreckt, insbesondere wobei der Einsteckabschnitt (76) eine fluidische Schnittstelle (74) aufweist.

10. Matratzenventil (14) nach einem der vorherigen Ansprüche, **dadurch gekennzeichnet, dass** die Druckbetätigungsvorrichtung (53) und/oder der Ventilgrundkörper (34) aus einem Kunststoff gebildet sind bzw. ist.

11. Baugruppe (10) umfassend eine selbstaufblasbare Matratze (12) und ein Matratzenventil (14) nach einem der vorherigen Ansprüche, wobei die Matratze (12) eine Außenwand (16) mit einem Aufnahmegewinde (26) aufweist, das mit dem Montagegewinde (28) des Matratzenventils (14) derart koppelbar ist, dass ein durch die Außenwand (16) und das Matratzenventil (14) umschlossenes Innenvolumen (22) der Matratze (12) von der Umgebung der Matratze (12) abgegrenzt ist.

12. Baugruppe (10) nach Anspruch 11, **dadurch gekennzeichnet, dass** das Matratzenventil (14) bei Betätigung der Druckbetätigungsvorrichtung (53) dazu eingerichtet ist, das Innenvolumen (22) der aufblasbaren Matratze (12) mit Luft aus der Umgebung bis zu dessen maximalen Volumen zu befüllen, wenn eine auf die Matratze (12) einwirkende Last (30) unterhalb eines Lastschwellenwerts liegt, und wobei das Matratzenventil (14) dazu eingerichtet ist, einen Luftstrom aus dem Innenvolumen (22) der aufblasbaren Matratze (12) in die Umgebung zu gewährleisten, wenn die auf die Matratze (12) einwirkende Last (30) oberhalb des Lastschwellenwerts liegt.

13. Baugruppe (10) nach Anspruch 11 oder 12, **dadurch gekennzeichnet, dass** die selbstaufblasbare Matratze (12) zumindest eine Luftkammer (18) aufweist, die mit dem eingeschraubten Matratzenventil (14) in Strömungsverbindung steht, wobei die Luftkammer (18) offenporige Kammerwände (20) aufweist.

## Claims

1. A mattress valve (14) for an inflatable mattress (12), comprising a valve base body (34) and a lockable pressure actuation device (53) movable relative to the valve base body (34), the mattress valve (14) having a mounting section (36) which has a mounting thread (28) by means of which the mattress valve (14) can be coupled to a corresponding receiving thread (26) of the inflatable mattress (12), the mattress valve (14) being arranged to allow an airflow between an inner volume (22) of the mattress (12) and an environment of the mattress (12) upon pressure actuation and in the released state of the lockable pressure actuation device (53), in a screwed-in state of the mattress valve (14), and the lockable pressure actuation device (53) being arranged to prevent pressure actuation of the lockable pressure actuation device (53) in a locked state, the locked state being realized by a mechanically blocking coupling of two components of the mattress valve (14) which prevents the movement of the pressure actuation device (53) at least along one degree of freedom, and a pressure actuation of the pressure actuation device (53) corresponding to a pressing of the pressure actuation device (53) in which a valve anchor (44) of the mattress valve (14) is moved against an elastic bias of an elastic biasing element (52).

2. The mattress valve (14) according to claim 1, **characterized in that** the mattress valve (14) is configured to allow airflows in opposite directions.

3. The mattress valve (14) according to claim 1 or 2, **characterized in that** the elastically biased valve anchor (44) is arranged such that a change in position of the valve anchor (44) relative to the valve base body (34) along an airflow direction of the mattress valve (14) allows an airflow through the mattress valve (14), in particular wherein the valve anchor (44) has a helical contour (48) on the outer surface thereof which engages a corresponding mating contour (58) of the pressure actuation device (53).

4. The mattress valve (14) according to any of the preceding claims, **characterized in that** the lockable pressure actuation device (53) has a rotatable ring section (54) which is rotatable relative to the valve base body (34), in particular within a defined angular range.

5. The mattress valve (14) according to claim 4, **characterized in that** the rotatable ring section (54) is arranged to block a pressure actuation of the lockable pressure actuation device (53) as a function of the position of the rotatable ring section relative to the valve base body (34).

6. The mattress valve (14) according to any of claims 4 and 5, **characterized in that** the valve base body (34) has at least one stop surface (70) for the lockable pressure actuation device (53), against which the lockable pressure actuation device (53) rests in the locked state, so that an axial movement of the lockable pressure actuation device (53) relative to the valve base body (34) is blocked, in particular wherein the lockable pressure actuation device (53) is arranged such that a rotation of the ring section (54) from the locked state to the released state results in an axial distance between the stop surface (70) and a resting surface (68) of the lockable pressure actuation device (53), which allows an axial pressure actuation of the lockable pressure actuation device (53).

7. The mattress valve (14) according to any of claims 4 to 6, **characterized in that** the ring section (54) has a structured ring outer contour (59), in particular a corrugated ring outer contour (59).

8. The mattress valve (14) according to any of the preceding claims, **characterized in that** the valve base body (34) comprises a base plate (38) and the mounting section (36) extending from the base plate (38) in a direction away from the ring section (54), in particular wherein the base plate (38) has a structured outer surface (42), for example a corrugation.

9. The mattress valve (14) according to claim 8, **characterized in that** a plug-in section (76) adjoins the mounting section (36) and extends from the mounting section (36) to a free end (40) of the valve base body (34), in particular wherein the plug-in section (76) has a fluidic interface (74).

10. The mattress valve (14) according to any of the preceding claims, **characterized in that** the pressure actuation device (53) and/or the valve base body (34) are/is formed from a plastic material.

11. An assembly (10) comprising a self-inflating mattress (12) and a mattress valve (14) according to any of the preceding claims, the mattress (12) comprising an outer wall (16) which has a receiving thread (26) which can be coupled to the mounting thread (28) of the mattress valve (14) such that an inner volume (22) of the mattress (12) enclosed by the outer wall (16) and the mattress valve (14) is delimited from the environment of the mattress (12).

12. The assembly (10) according to claim 11, **characterized in that** the mattress valve (14), upon actuation of the pressure actuation device (53), is arranged to fill the inner volume (22) of the inflatable mattress (12) with air from the environment to its maximum volume when a load (30) acting on the mattress (12) is below a load threshold, and wherein the mattress valve (14) is arranged to ensure an airflow from the inner volume (22) of the inflatable mattress (12) to the environment when the load (30) acting on the mattress (12) is above the load threshold.

13. The assembly (10) according to claim 11 or 12, **characterized in that** the self-inflating mattress (12) comprises at least one air chamber (18) which is in fluid communication with the screwed-in mattress valve (14), the air chamber (18) comprising open-pored chamber walls (20).

## Revendications

1. Valve de matelas (14) pour un matelas gonflable (12), comprenant un corps de base de valve (34) et un dispositif d'actionnement par pression verrouillable (53) qui est mobile par rapport au corps de base de valve (34), la valve de matelas (14) comprenant une partie de montage (36) présentant un filet de montage (28) au moyen duquel la valve de matelas (14) peut être couplée à un filet de réception correspondant (26) du matelas gonflable (12), la valve de matelas (14) étant réalisée de manière à permettre, lors d'un actionnement par pression et à l'état libéré du dispositif d'actionnement par pression verrouillable (53), dans un état vissé de la valve de matelas (14), un flux d'air entre un volume intérieur (22) du matelas (12) et un environnement du matelas (12), et le dispositif d'actionnement par pression verrouillable (53) étant réalisé de manière à empêcher, dans un état verrouillé, un actionnement par pression du dispositif d'actionnement par pression verrouillable (53), l'état verrouillé étant formé par un couplage à blocage mécanique de deux composants de la valve de matelas (14) qui empêche le mouvement du dispositif d'actionnement par pression (53) au moins le long d'un degré de liberté, et un actionnement par pression du dispositif d'actionnement par pression (53) correspondant à une pression sur le dispositif d'actionnement par pression (53), lors de laquelle un ancrage de valve (44) de la valve de matelas (14) est déplacé contre une précontrainte élastique d'un élément de précontrainte élastique (52).

2. Valve de matelas (14) selon la revendication 1, **caractérisée en ce que** la valve de matelas (14) est réalisée de manière à permettre des flux d'air dans des sens opposés.

3. Valve de matelas (14) selon la revendication 1 ou 2, **caractérisée en ce que** l'ancrage de valve (44) précontraint élastiquement est aménagé de telle sorte qu'un changement de position de l'ancrage de valve (44) par rapport au corps de base de valve (34) le long d'un sens d'écoulement d'air de la valve de matelas (14) permet un flux d'air à travers la valve de matelas (14), l'ancrage de valve (44) présentant en particulier sur sa face extérieure un contour hélicoïdal (48) qui s'engage avec un contre-contour correspondant (58) du dispositif d'actionnement par pression (53).

4. Valve de matelas (14) selon l'une des revendications précédentes, **caractérisée en ce que** le dispositif d'actionnement par pression verrouillable (53) présente une partie annulaire rotative (54) qui est rotative par rapport au corps de base de valve (34), en particulier dans une plage angulaire définie.

5. Valve de matelas (14) selon la revendication 4, **caractérisée en ce que** la partie annulaire rotative (54) est aménagée de manière à bloquer un actionnement par pression du dispositif d'actionnement par pression verrouillable (53) en fonction de sa position relative par rapport au corps de base de valve (34).

6. Valve de matelas (14) selon l'une des revendications 4 et 5, **caractérisée en ce que** le corps de base de valve (34) présente au moins une surface de butée (70) pour le dispositif d'actionnement par pression verrouillable (53), sur laquelle le dispositif d'actionnement par pression verrouillable (53) s'appuie à l'état verrouillé, de sorte qu'un mouvement axial du dispositif d'actionnement par pression verrouillable (53) par rapport au corps de base de valve (34) est bloqué, le dispositif d'actionnement par pression verrouillable (53) étant en particulier aménagé de telle sorte que, par une rotation de la partie annulaire (54) de l'état verrouillé à l'état libéré, une distance axiale est formée entre la surface de butée (70) et une surface d'appui (68) du dispositif d'actionnement par pression verrouillable (53), laquelle permet un actionnement axial par pression du dispositif d'actionnement par pression verrouillable (53).

7. Valve de matelas (14) selon l'une des revendications 4 à 6, **caractérisée en ce que** la partie annulaire (54) présente un contour extérieur annulaire structuré (59), en particulier un contour extérieur annulaire cannelé (59).

8. Valve de matelas (14) selon l'une des revendications précédentes, **caractérisée en ce que** le corps de base de valve (34) comprend une plaque de base (38) et la partie de montage (36) qui s'étend à partir de la plaque de base (38) dans un sens en éloignement de la partie annulaire (54), la plaque de base (38) présentant en particulier une surface extérieure structurée (42), par exemple une cannelure.

9. Valve de matelas (14) selon la revendication 8, **caractérisée en ce qu'**une partie d'insertion (76) se raccorde à la partie de montage (36) et s'étend à partir de la partie de montage (36) vers une extrémité libre (40) du corps de base de valve (34), la partie d'insertion (76) présentant en particulier une interface fluidique (74).

10. Valve de matelas (14) selon l'une des revendications précédentes, **caractérisée en ce que** le dispositif d'actionnement par pression (53) et/ou le corps de base de valve (34) est/sont réalisé(s) en une matière plastique.

11. Ensemble (10) comprenant un matelas autogonflant (12) et une valve de matelas (14) selon l'une des revendications précédentes, le matelas (12) présentant une paroi extérieure (16) avec un filet de réception (26) qui peut être couplé au filet de montage (28) de la valve de matelas (14) de sorte qu'un volume intérieur (22) du matelas (12), délimité par la paroi extérieure (16) et la valve de matelas (14), est séparé de l'environnement du matelas (12).

12. Ensemble (10) selon la revendication 11, **caractérisé en ce que** la valve de matelas (14) est aménagée de manière à remplir le volume intérieur (22) du matelas gonflable (12) avec de l'air provenant de l'environnement jusqu'à son volume maximal lors de l'actionnement du dispositif d'actionnement par pression (53) lorsqu'une charge agissant sur le matelas (12) est inférieure à une valeur seuil de charge, et la valve de matelas (14) étant réalisée de manière à assurer un flux d'air depuis le volume intérieur (22) du matelas gonflable (12) vers l'environnement lorsque la charge (30) agissant sur le matelas (12) est supérieure à la valeur seuil de charge.

13. Ensemble (10) selon la revendication 11 ou 12, **caractérisé en ce que** le matelas autogonflant (12) comporte au moins une chambre à air (18) qui est en communication fluidique avec la valve de matelas (14) vissée, la chambre à air (18) présentant des parois de chambre (20) à pores ouverts.
